# EUROPÄISCHE PATENTSCHRIFT

(11) **EP 1 947 493 B1**
(45) Veröffentlichungstag und Bekanntmachung des Hinweises auf die Patenterteilung: **28.12.2011**
(21) Anmeldenummer: 08405004.6
(22) Anmeldetag: 07.01.2008
(51) Int. Cl.: G02B 6/42, G02B 6/38

(54) **Steckverbindersystem und Schutzvorrichtung für optischen Steckverbinder**
Connector system and protection device for optical connectors
Système de connecteur à fiches et dispositif de protection pour connecteurs à fiches optiques

(30) Priorität: 16.01.2007 CH 632007
(43) Veröffentlichungstag der Anmeldung: 23.07.2008
(73) Patentinhaber: Reichle & De-Massari AG, 8622 Wetzikon (CH)
(72) Erfinder: Ruckstuhl, Thomas, 8623 Wetzikon (CH); Friedrich, Giorgio, 8442 Hettlingen (CH); Weber, Rolf, 8427 Freienstein (CH)
(74) Vertreter: Frei Patent Attorneys

(56) Entgegenhaltungen:
- EP-A- 0 486 172
- EP-A- 1 168 019
- DE-A1- 4 444 568
- JP-A- 57 085 014
- US-A1- 2003 169 975
- US-A1- 2004 179 787
- US-B1- 6 424 758

## Beschreibung

Die Erfindung betrifft ein Steckverbindersystem und eine Schutzvorrichtung für einen optischen Steckverbinder.

Die Datenübertragung über optische Wellenleiter ist von zunehmender Bedeutung. Die Datenübertragungsrate wird zunehmend grösser, wodurch auch die über die faseroptischen Verbindungen geleitete Strahlungsleistung immer höher wird. Die Strahlungsleistung ist mittlerweile so hoch, dass die Strahlung das menschliche Auge irreparabel schädigen kann. Daher stellt sich insbesondere bei optischen Steckverbindungen die Frage nach der Sicherheit für Anwender. Dort können optischen Strahlungen nämlich austreten, wenn die Steckverbindung getrennt ist.

Auf dem Markt sind Stecker und Kupplungen erhältlich, die eine sogenannte Laser-Schutzklappe integriert haben. Durch diese wird bei geöffneter Steckverbindung die Strahlung am Austritt aus dem Steckverbindungsteil mechanisch gehindert. Mit immer grösserer Laserleistung stossen die für solche Schutzklappen anwendbaren Materialien jedoch zunehmend an ihre Belastungsgrenzen. Bei allzu langer Immission nehmen die Schutzklappen irreparablen Schaden. Ausserdem kann die an den Schutzklappen reflektierte und gestreute und anschliessend unkontrolliert aus dem Steckverbindungsteil austretende Streustrahlung ebenfalls beträchtlich sein. Ebenso ist eine zu den Schutzklappen zusätzliche Sicherheit wünschenswert.

Es wurde bereits vorgeschlagen, einen Steckverbinder mit einer Vorrichtung vorzusehen, mit der festgestellt wird, ob die Verbindung offen ist oder nicht. Bei nicht eingestecktem Stecker wird die Strahlungsquelle - i.A. ein Laser - abgeschaltet. Eine solche Massnahme ist bspw. in den Schriften EP 1 237 024, US 5,708,745 , DE 41 39 918, US 2003/169975, JP 57 085 014, EP 1 168 019, DE 44 44 568, EP 0 486 172, US 6 424 758 und US 2004/179787 aufgezeigt.

Nachteilig bei solchen Steckverbindern ist, dass durch die vorzusehende Massnahme der Steckverbindungstyp neu definiert wird und die Steckverbindung nicht kompatibel mit normierten Steckverbindern ist. Eine solche Lösung hat sich folglich bisher auf dem Markt auch nicht durchgesetzt.

Es ist eine Aufgabe der Erfindung, hier Abhilfe zu schaffen und einen optischen Steckverbinder sowie eine Schutzvorrichtung für optische Steckverbinder zur Verfügung zu stellen, welcher Nachteile gemäss dem Stand der Technik überwinden und welche insbesondere eine Lösung ermöglichen, welche die Kompatibilität mit bestehenden, normierten Steckverbindungen gewährleistet.

Diese Aufgabe wird gelöst durch die Erfindung, wie sie in den Patentansprüchen definiert ist.

Ein optisches Steckverbindersystem der erfindungsgemässen Art weist einerseits ein Buchsen-, Adapter- oder Kupplungsteil mit einem Buchsengehäuse sowie andererseits ein Steckerteil auf. Ein Inneres des Buchsengehäuses definiert einen Innenraum, in den eine Steckerpartie des Steckerteils einführbar ist, wodurch zwischen dem ein Buchsen-, Adapter- oder Kupplungsteil und dem Steckerteil eine lösbare Steckverbindung herstellbar ist. Weiter ist eine Schaltereinrichtung vorhanden, durch welche eine dem Steckerteil und/oder dem Buchsen-, Adapter- oder Kupplungsteil zugeführte Strahlungsleistung reduzierbar oder ausschaltbar ist, wenn die Steckverbindung gelöst wird, indem eine entsprechende Information von der Schaltereinrichtung an den Ort der Strahlungsquelle übermittelt wird. Gemäss einem ersten Aspekt der Erfindung weist die Schaltereinrichtung einerseits ein am Buchsen-, Adapter- oder Kupplungsteil befestigbares erstes Element und andererseits ein am Steckerteil befestigbares zweites Element auf wobei die Schaltereinrichtung betätigt wird, indem das erste und das zweite Element zusammenwirken. Dabei ist das zweite Element an einer von der Steckerpartie verschiedenen Partie des Steckerteils nachträglich befestigbar.

Durch das erfindungsgemässe Vorgehen wird ein sehr effektiver Personenschutz ermöglicht. Aufgrund eines Signals von der Schaltereinrichtung kann die aktive Komponente (Strahlungsquelle) sofort ausgeschaltet bzw. ihre Leistung auf ein nicht schädliches Mass reduziert werden. Die Schaltereinrichtung ist mit der Strahlungsquelle bzw. dessen Steuerung vorzugsweise über eine elektrische Verkabelung verbunden. Die Einrichtung kann auch Teil eines Sicherheitssystems sein, welches sich durch eine in Serie geschaltete Einheit auszeichnet. Besonders bevorzugt erfolgt die Rückführung des elektrischen Signals über Transistor-Transistor-Logik (TTL), da dadurch ein sehr schnelles Abschalten oder Zurückfahren der Leistung gewährleistet ist. Die Steuerung der Strahlungsquelle ist vorzugsweise so ausgelegt, dass das Abschalte- oder Herunterfahr-Signal von der Schaltereinrichtung alle anderen Befehle übersteuert.

Ein Unterbruch einer faseroptischen Verbindung ist im Allgemeinen teuer. Durch die aufgrund des erfindungsgemässen Vorgehens ermöglichte automatische Alarmierung und Leistungsreduktion bzw. Abschaltung kann die Down-Time (Zeit ohne Funktion) der optischen Übertragung reduziert werden.

Dadurch, dass ein zweites Element an einem von der Steckerpartie verschiedenen Ort des Steckerteils (d.h. an einem Ort, der in axialer Richtung so angeordnet ist, dass die Ausgestaltung des den Stecker aufnehmenden Buchsenteils nicht von den äusseren Dimensionen des zweiten Elements abhängig ist) vorhanden ist, kann diese gemäss bestehenden Steckverbindertypen ausgestaltet sein und auch in nicht erfindungsgemäss ausgestaltete Buchsen-, Adapter- oder Kupplungsteile passen. Nebst dieser Kompatibilität hat das den sehr wichtigen Vorteil, dass die erfindungsgemässe Lösung auch nachrüstbar ist. Eine Nachrüstung erfolgt bspw. durch das Befestigen des ersten Elements aussen am Buchsen- Adapter, oder Kupplungsteil und das Befestigen des zweiten Elements am Steckerteil, und zwar hinter (im Bezug auf eine Einsteckrichtung) der Steckerpartie als dem Teil, der in die Buchse eingeführt wird und dessen äussere Dimensionen daher durch die Buchse beschränkt sind. Das Nachrüsten kann somit mit einer minimalen Down-Time oder eventuell gar ohne Unterbruch an einem bestehenden System vorgenommen werden.

Die Erfindung macht sich also den Ansatz zu Nutze, wonach die Schaltereinrichtung im Wesentlichen ausserhalb des Innenraums (der "Buchsenöffnung") wirkt. Die Schutzvorrichtung ist deshalb bei Bedarf auch nachträglich befestigbar. Bestehende Stecksysteme lassen sich auf einfachste Weise den geforderten Sicherheitsbestimmungen entsprechend nachrüsten. Das erfindungsgemässe Steckverbindersystem kann daher einem bekannten Steckverbindersystem entsprechen, mit den zusätzlich aussenseitig angebrachten Elementen "Schaltereinrichtung, erstes Element, zweites Element". Das Steckverbindungssystem weist vorzugsweise - wie das bei den benannten Steckverbindungssystemen der Fall ist - von der Schutzvorrichtung unabhängige zusätzliche Rastmittel auf.

Eine erfindungsgemässes Schutzvorrichtung, die als Nachrüstset ausgestaltet sein kann oder mit dem Steckverbinder ausgeliefert werden kann, weist demgemäss eine Schaltereinrichtung auf, durch welche eine dem Steckerteil und/oder dem Buchsen-, Adapter- oder Kupplungsteil zugeführte Strahlungsleistung reduzierbar oder ausschaltbar ist, wenn die Steckverbindung gelöst wird. Sie zeichnet sich dadurch aus, dass die Schaltereinrichtung an einer Aussenseite des Buchsengehäuses (oder eventuell auch des Steckergehäuses) befestigbar ist und betätigbar ist, indem das Steckerteil in das Buchsen-, Adapter- oder Kupplungsteil eingesteckt wird.

Gemäss einer bevorzugten Ausführungsform wird die Schaltereinrichtung durch das Zusammenwirken eines ersten Elements - bspw. eines versenkten Betätigungsvorsprungs eines mechanischen Schalters, einer Hall-Sonde, eines RFID-Empfängers oder einer Fotodiode - mit einem vorzugsweise passiven zweiten Element - bspw. eines Anschlags oder Gegenvorsprungs für den Betätigungsvorsprung, eines Permanentmagneten, eines RFID-Tags (Funketikette) beziehungsweise eines Reflektors für eine Detektionsstrahlung geringer Strahlungsleistung - betätigt. Diesen Anordnungen ist gemeinsam, dass sie ermöglichen, dass durch das in-die-Buchse-Einführen des Steckers die Schalteinrichtung betätigt wird, so, dass automatisch, ohne aktive Betätigung eines Elements, die Freigabe erfolgt und die volle Strahlungsleistung freigegeben wird. Ebenso selbsttätig erfolgt die Reduktion der Strahlungsleistung beim Entfernen des Steckers aus der Buchse.

Durch diese Ausgestaltungen des ersten und zweiten Betätigungselements wird ausserdem sichergestellt, dass die Schaltereinrichtung nur dann werkzeugfrei betätigbar ist, wenn das zweite Element vorhanden ist und der Stecker in die Buchse eingeführt wird.

Diese Ausführungsform hat den Vorteil, dass die Schaltereinrichtung unabhängig von eventuell vorhandenen weiteren Schutzmechanismen wie bspw. einer Schutzklappe wirkt. Zum Überbrücken der Sicherungsmassnahmen muss man daher zwei unabhängige Mechanismen (Schaltereinrichtung und Schutzklappe) betätigen; es kann praktisch ausgeschlossen werden, dass das unabsichtlich oder gedankenlos gemacht wird.

Die Schaltereinrichtung kann wie bereits erwähnt auf verschiedenen Prinzipien beruhen. Besonders bevorzugt ist die Ausführung als 'Microswitch', d.h. als kleiner mechanisch betätigter elektrischer Schalter. Solche Schalter sind Beispiele für integrierte, gekapselte Bauteile mit einem elektrischen Ausgang. Schalter dieses Typs sind auf dem Markt erhältlich. Für die Anwendung im Sinne der Erfindung ist ein solcher Schalter bevorzugt nicht rastend, d.h. er wirkt als Taster: unabhängig von der Vorgeschichte wird die Strahlungsquelle nur dann in voller Leistung operativ sein können, wenn ein Betätigungselement entgegen einer Federkraft in einer Auslenkstellung gehalten wird. Sobald die Steckverbindung gelöst ist, kehrt das Betätigungselement aufgrund der Wirkung der Federkraft in die Ruhestellung zurück, und die Strahlungsquelle wird heruntergefahren oder ausgeschaltet, bspw. indem die Stromzufuhr für die optische Quelle unterbrochen wird.

Das Betätigungselement kann bspw. axial angeordnet sein, d.h. es ist in etwa parallel zur Steckerachse verschiebbar. Beim Einstecken des Steckerteils wird es durch ein entsprechendes Gegenstück am Steckerteil (einen Anschlag oder Gegenvorsprung des zweiten Elements) betätigt. Besonders bevorzugt ist das Betätigungselement versenkt, und der Gegenvorsprung greift im eingesteckten Zustand des Steckverbinders ins Innere einer Öffnung ein. Dadurch kann ein zufälliges, unabsichtliches Betätigen des Betätigungselements praktisch ausgeschlossen werden.

Alternativ kann die Schaltereinrichtung auch auf anderen Prinzipien als denen eines mechanisch betätigten Schalters beruhen, und bspw. als Halleffekt-Schalter, als RFID-Schalter, als optischer Schalter etc. funktionieren.

Besonders vorteilhaft ist der erfindungsgemässe Ansatz im Zusammenhang mit der LSH-Steckernorm, da diese sehr kompakte Steckverbinder vorsieht; ausserdem besteht am Steckerteil eine Aufsteckpartie, der zum Aufclippen eines passiven Elements mit Kragen geeignet ist. Der erfindungsgemässe Ansatz funktioniert aber auch bei anderen Steckverbindern, wie bspw. dem SC-Verbinder, dem BFOC-Verbinder, dem FC/PC-Verbinder, dem LC-Verbinder oder irgend einem anderen, i.A. normierten Steckverbinder.

Nachfolgend werden Ausführungsbeispiele der Erfindung anhand von Zeichnungen näher erläutert. In den Zeichnungen zeigen:
- Fig. 1 eine Darstellung je eines erfindungsgemäss ausgestalteten Kupplungsteils und Steckerteils eines Steckverbinders vom Typ LSH,
- Fig. 2a eine Ansicht eines nachträglich montierbaren Schalterelementes mit Mikroschalter und Schalterberfestigung,
- Fig. 2b eine weitere Ansicht des Schalterelements,
- Fig. 3 eine Ansicht eines entsprechenden passiven Elements für das Steckerteil,
- Fig. 4 eine Explosionsdarstellung einer Schutzvorrichtung mit Klappen-Detektion,
- Fig. 5 eine Darstellung der Schutzvorrichtung gemäss Figur 4 im montierten Zustand, und
- Fig. 6 eine Variante der Steckverbindung und der Schutzvorrichtung.

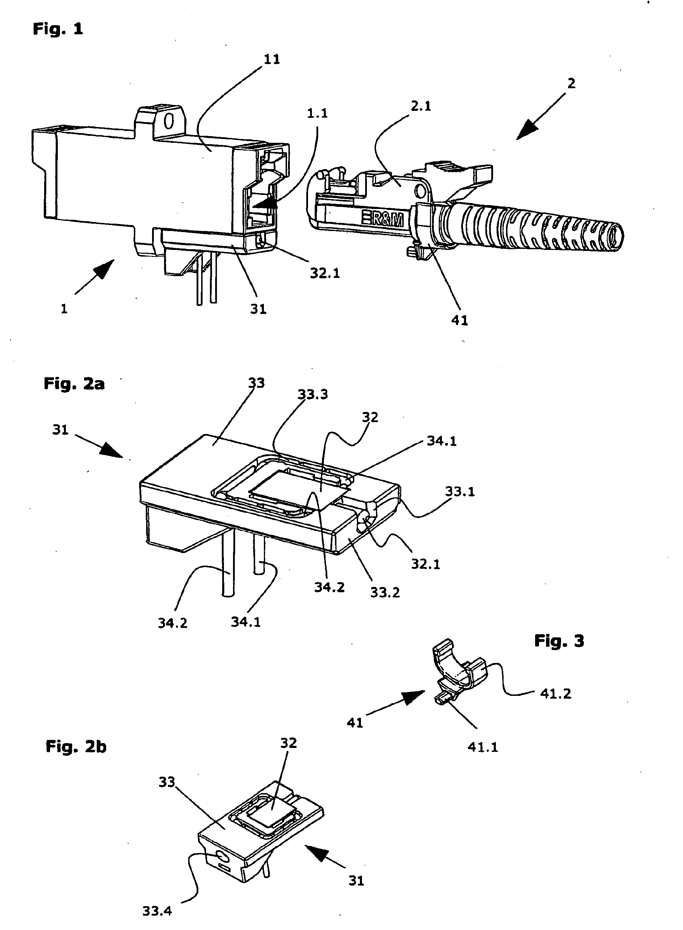

Das in **Figur 1** gezeichnete Steckverbindersystem umfasst ein Buchsen-, Adapterrespektive Kupplungsteil 1 und ein Steckerteil 2. Er ist in der dargestellten Ausführungsform gemäss dem Typ LSH ausgestaltet und besitzt Rastmittel, mit welchen eine zugfeste Rastverbindung zwischen dem Steckerteil und dem Buchsen-, Adapter- respektive Kupplungsteil 1 herstellbar ist. Diese Rastmittel, Mittel zum Lösen der Rastverbindung, eine Ferrule, Mittel zum Führen der Ferrule, Mittel zum mechanischen Codieren oder Farbcodieren sowie je eine Schutzklappe des Buchsen-, Adapter- respektive Kupplungsteils 1 und des Steckerteils sind an sich bekannt und werden hier nicht beschrieben. Weitere Informationen findet man beispielsweise in der Schrift EP 0 570 652.

Aussenseitig am Gehäuse 11 des Buchsen-, Adapter- respektive Kupplungsteils 1 ist ein Schalterelement 31 angebracht. Dieses wirkt mit einem entsprechenden passiven Element 41 zusammen, welches am Steckerteil 2 vorhanden oder - wie in der gezeichneten Ausführungsform - an diesem befestigt ist. Das Schalterelement weist einen Betätigungsvorsprung 32.1 auf, welches durch das passive Element 41 entgegen einer Federkraft ausgelenkt wird, wenn das Steckerteil 2 in das Buchsen-, Adapter- respektive Kupplungsteil 1 eingesteckt wird.

Derjenige Bereich des Steckerteils 2, der im gesteckten Zustand der Verbindung in einen Innenraum 1.1 (Buchsenöffnung) des Buchsen-, Adapter- respektive Kupplungsteils 1 eingeführt ist, wird generell "Steckerpartie" 2.1 genannt. Aus der Figur wird ersichtlich, dass das passive Element 41 an einem von der Steckerpartie verschiedenen Ort des Steckerteils vorhanden ist. Dieses Merkmal ermöglicht die Verträglichkeit der erfindungsgemässen Lösung mit bestehenden Normen und die Nachrüstbarkeit: der eigentliche, normierte Bereich der Buchsenöffnung und Steckerpartie muss nicht modifiziert werden.

**Figur 2a** zeigt das als Schalterelement bezeichnete erste Element der Schaltereinrichtung noch etwas detaillierter. Das Schalterelement weist einen nicht-rastenden, mechanisch betätigten Schalter (Microswitch, Taster) 32 auf. Das Betätigungselement 32.1 ist als Betätigungsvorsprung (Stössel) des Schalters 32 ausgebildet. Der Schalter ist in einer Schalterbefestigung 33 gehalten, die ihrerseits am Buchsen-, Adapter- respektive Kupplungsteil 1 befestigbar ist. Innerhalb der Schalterbefestigung 33 ist der Schalter 32 so positioniert, dass das Betätigungselement 32.1 versenkt ist, d.h. sich in einer ganzen Länge innerhalb einer Öffnung 33.1 in der Schalterbefestigung 33 befindet und stirnseitig nicht über eine Endfläche 33.2 der Schalterbefestigung 33 hinausragt.

Der Schalter besitzt einen elektrischen Ausgang, welcher hier durch zwei seitlich abgehende Kabel 34.1, 34.2 gebildet wird, die durch Kabelführungsrinnen 33.3 der Schalterbefestigung geführt und durch entsprechende (in den Figuren nicht sichtbare) Öffnungen zur Unterseite der Schalterbefestigung 33 hin weggeführt sind. In an sich bekannter Art kann bspw. je nach Schalterzustand durch den Schalter eine elektrische Verbindung zwischen den beiden vorhandenen herausgeführten Kontakten bestehen oder unterbrochen sein. Diese Information wird in einer vom Buchsen-, Adapter- respektive Kupplungsteil 1 entfernten Steuerung der Strahlungsquelle genutzt, um diese je nach dem mit voller Leistung oder mit reduzierter Leistung bzw. gar nicht arbeiten zu lassen.

In der gezeichneten Ausführungsform besitzt das Schalterelement 31, wie in **Figur 2b** gezeichnet, ein Befestigungsloch 33.4, das in der Schalterbefestigung 33 vorhanden ist und mittels welchem das Schalterelement 31 am Buchsen-, Adapterrespektive Kupplungsteil 1 oder einer Halterung, an der dieses montiert ist, beispielsweise angeschraubt werden kann.

In **Figur 3** ist das als "passives Element" 41 bezeichnete zweite Element der Schaltereinrichtung gezeichnet. Da das Betätigungselement 32.1 des Schalterelements versenkt ist, ist sein Gegenstück, der Gegenvorsprung 41.1 stiftartig ausgebildet und ragt bei geschlossener Steckverbindung in die Öffnung 33.1 hinein. Das passive Element besitzt weiter eine manschettenartige Partie 41.2 zum Aufclippen auf ein Steckerteil.

Im Unterschied zur gezeichneten Ausführungsform kann das passive Element 41 und/oder die Schalterbefestigung 33 einstückig mit dem Steckerteil 2 bzw. dem Buchsen-, Adapter- respektive Kupplungsteil 1 ausgebildet sein.

Die anhand der Figuren 1 bis 3 beschriebene Ausführungsform - sowie andere Ausführungsformen mit funktionsähnlichen Schaltereinrichtungen - hat den Vorteil, dass das Betätigungselement erst bei ganz eingeführtem Steckerteil betätigt wird. Ein nur teilweise eingeführtes Steckerteil löst den Schalter nicht aus. Dies bringt eine erhöhte Sicherheit mit sich und minimiert die Zeit, während der Strahlung auf den Steckverbinder einwirkt, ohne bestimmungsgemäss in einen Lichtwellenleiter eingekoppelt zu werden.

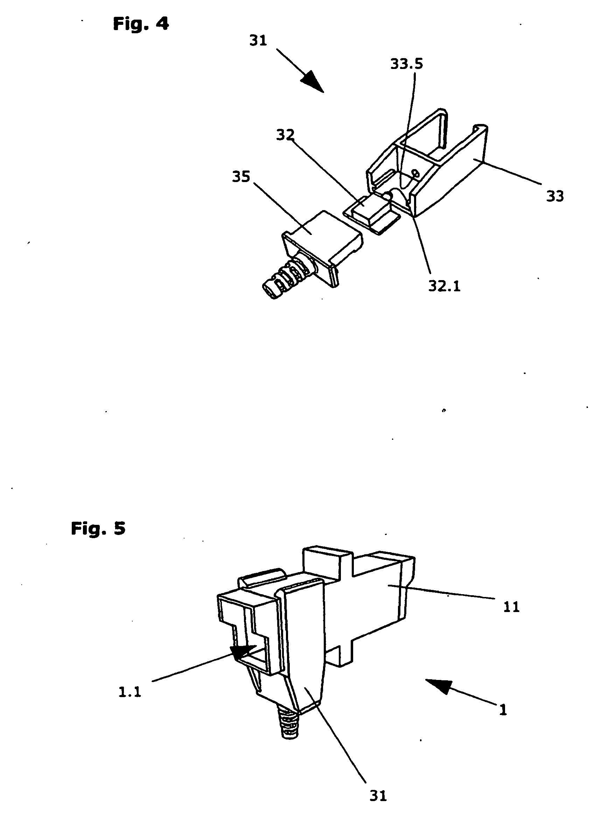

Eine zu den Figuren 1 bis 3 alternative Schutzvorrichtung ist in **Figur 4** gezeichnet. Diese beruht darauf, dass das Betätigungselement 32.1 durch die Schutzklappe (nicht gezeichnet) betätigt wird, die im Innern des LSH- Buchsen-, Adapter- respektive Kupplungsteils 1 angeordnet ist und die durch das Einführen des Steckerteils in die Buchsenöffnung entgegen einer Federkraft verschoben wird. Zu diesem Zweck ist, was in **Figur 5** besonders gut ersichtlich ist, der Schalter 32 "vertikal" angeordnet, d.h. das Betätigungselement 32.1 wird in Bezug auf die Steckerachse in radialer (hier vertikaler) Richtung verschoben.

Nebst dem Schalter 32 weist das Schalterelement 31, das zusammen mit der Schutzklappe die Schaltereinrichtung bildet, noch eine Schalterbefestigung 33 mit manschettenartigen Befestigungsarmen 33.6 und eine Kabelwegführung 35 auf. Das Betätigungselement 32.1 ragt durch eine Öffnung 33.5 in der Schalterbefestigung und eine Öffnung (nicht gezeichnet) im Buchsengehäuse 11 in den Innenraum und wird durch die Schutzklappe betätigt, wenn diese ganz an der Innenwand anliegt, die in der gezeichneten Konfiguration unten liegt (Fig.5).

Auch bei dieser Ausführungsform ist die Verträglichkeit mit bestehenden Steckertypen/optischen Steckverbindersystemen - wie hier dem LSH-Typ - gewährleistet, und ausserdem die Nachrüstbarkeit gegeben. In dieser Ausführungsform muss das Steckerteil im Vergleich zu Steckerteilen gemäss dem Stand der Technik in keiner Weise substantiell modifiziert sein.

Die Schalterbefestigung 33 kann auch in dieser Ausführungsform anstelle der manschettenartigen Befestigungsarme 33.6 ein Befestigungsloch zum Anschrauben der Schalterbefestigung aufweisen. Dann ist die gesamte Breite des Steckverbinders auch nicht unbedingt grösser als die eines Buchsen-, Adapter- respektive Kupplungsteils gemäss dem Stand der Technik, und es kann an Paneelen mit dicht nebeneinander angeordneten Buchsen-, Adapter- respektive Kupplungsteilen verwendet werden.

Die Ausführungsform der Figuren 4 und 5 hat mit derjenigen der vorhergehenden Figuren gemeinsam, dass die Schaltereinrichtung einen zumindest in einem der Schalterzustände vollständig ausserhalb des Innenraums angeordneten Messfühler (hier: das Betätigungselement) aufweist.

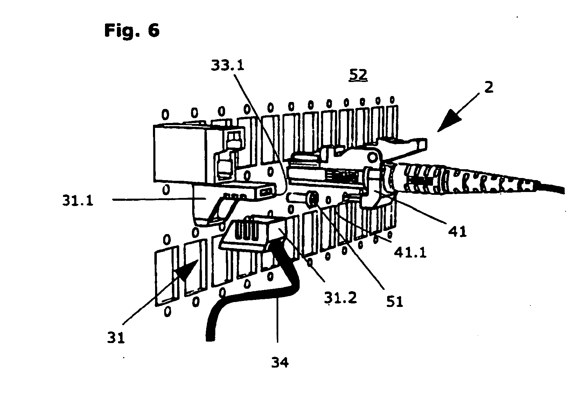

**Figur 6** zeigt eine Variante des erfindungsgemässen optischen Steckverbindersystems und der Schutzvorrichtung. Gemäss dieser Variante weist das Schalterelement 31 ein Supportelement 31.1 und ein Clip-Element 31.2 auf. Das Supportelement 31.1 ist aussenseitig am Buchsengehäuse und/oder - wie in der gezeichneten Ausführungsform anliegend an das Gehäuse an einem Paneel 52 - hier mit Hilfe einer Schraube 51 - befestigbar. Das Clip-Element 31.2 weist die Schaltereinrichtung auf und ist endseitig am elektrischen Kabel 34 befestigt, welches Leiter aufweist, die im Betriebszustand mit den Ausgängen der Schaltereinrichtung im Kontakt stehen. Zwecks Sicherheit kann das Clip-Elemetn 31.2 zusätzlich mit dem Supportelement 31.1 verschraubt werden. Die Verdrahtung ist vorzugsweise so, dass die Strahlungsleistung immer ausgeschaltet bzw. reduziert ist, wenn die Leiter des Kabels 34 keinen Kontakt mit dem Schalter haben.

Die Zweiteiligkeit des Schalterelements 31 gemäss Figur 6 ist vorteilhaft bei der Montage.

Die Erfindung betrifft demnach auch ein optisches Steckverbindersystem, welches ein Buchsen-, Adapter- oder Kupplungsteil mit einem Buchsengehäuse sowie ein Steckerteil aufweist, wobei ein Inneres des Buchsengehäuses einen Innenraum definiert, in den eine Steckerpartie des Steckerteils einführbar ist, wodurch zwischen dem ein Buchsen-, Adapter- oder Kupplungsteil und dem Steckerteil eine lösbare Steckverbindung herstellbar ist, weiter aufweisend eine Schaltereinrichtung, durch welche eine dem Steckerteil und/oder dem Buchsen-, Adapter- oder Kupplungsteil zugeführte Strahlungsleistung reduzierbar oder ausschaltbar ist, wenn die Steckverbindung gelöst wird, der sich dadurch auszeichnet, dass die Schaltereinrichtung einen in mindestens einem Schaltzustand ausserhalb des Innenraums angeordneten Messfühler aufweist.

Obwohl alle gezeichneten Ausführungsformen auf dem Steckertyp LSH beruhen, ist eine entsprechende Anpassung auf andere Steckertypen ohne Weiteres im Rahmen des fachüblichen Handelns machbar.

Anstelle der gezeichneten Mikroschalter 32 können andere, beispielsweise berührungslose Schalter verwendet werden.

## Patentansprüche

1. An einem normierten optischen Steckverbindersystem montierbare Schutzvorrichtung, wobei das Steckverbindersystem ein Buchsen-, Adapter- oder Kupplungsteil (1) mit einem Buchsengehäuse (11) sowie ein Steckerteil (2) aufweist, wobei ein Inneres des Buchsengehäuse einen Innenraum (1.1) definiert, in den eine Steckerpartie (2.1) des Steckerteils einführbar ist, wodurch zwischen dem Buchsen-, Adapter- oder Kupplungsteil (1) und dem Steckerteil (2) eine lösbare Steckverbindung herstellbar ist, die Schutzvorrichtung aufweisend eine Schaltereinrichtung, durch welche eine dem Steckerteil und/oder dem Buchsen-, Adapter- oder Kupplungsteil zugeführte Strahlungsleistung reduzierbar oder ausschaltbar ist, wenn die Steckverbindung gelöst wird, wobei die Schaltereinrichtung ein an einer Aussenseite des Buchsengehäuses (11) befestigbares erstes Element und ein an einer von der der Steckerpartie verschiedenen Partie des Steckerteils befestigbares zweites Element (41) aufweist und betätigbar ist, indem das erste und das zweite Element zusammenwirken, wenn das Steckerteil (2) in das Buchsen-, Adapter- oder Kopplungsteil (1) eingesteckt wird.

2. Schutzvorrichtung nach Anspruch 1, **dadurch gekennzeichnet, dass** sich im montierten Zustand der Schutzvorrichtung alle Elemente der Schaltereinrichtung mindestens in einem Schaltzustand der Schaltereinrichtung, vorzugsweise in jedem Schaltzustand der Schaltereinrichtung vollständig ausserhalb des Innenraums des Buchsengehäuses befinden..

3. Schutzvorrichtung nach Anspruch 1 oder 2, **dadurch gekennzeichnet, dass** das zweite Element ein am normierten Steckerteil anbringbares, beispielsweise nachrüstbares aufclipbares Element zur Betätigung der Schaltereinrichtung ist, wobei das zweite Element rein passiv und frei von Komponenten ist, die eine Energieversorgung benötigen.

4. Schutzvorrichtung nach Anspruch 3, **dadurch gekennzeichnet, dass** das zweite Element einen Gegenvorsprung zur Betätigung eines nicht rastenden mechanischen Schalters der Schaltereinrichtung aufweist.

5. Schutzvorrichtung nach einem der Ansprüche 1 bis 4, **dadurch gekennzeichnet, dass** sie so dimensioniert ist, dass sie auf Steckverbindertypen der Norm LSH montierbar ist.

6. Optisches Steckverbindersystem, welches ein Buchsen-, Adapter- oder Kupplungsteil (1) mit einem Buchsengehäuse (11) sowie ein Steckerteil (2) aufweist, wobei ein Inneres des Buchsengehäuses einen Innenraum (1.1) definiert, in den eine Steckerpartie (2.1) des Steckerteils einführbar ist, wodurch zwischen dem Buchsen-, Adapter- oder Kupplungsteil (1) und dem Steckerteil (2) eine lösbare Steckverbindung herstellbar ist, **gekennzeichnet durch** eine aussenseitig am Buchsengehäuse und am Steckerteil angebrachte Schutzvorrichtung nach einem der vorangehenden Ansprüche.

7. Steckverbindersystem nach Anspruch 6 **dadurch gekennzeichnet, dass** das erste Element der Schaltereinrichtung einen nicht-rastenden, mechanisch betätigbaren Schalter (32) mit einem Betätigungselement (32.1) aufweist, das für die Betätigung durch das zweite Element (41) entgegen einer Federkraft zu verschieben ist.

8. Steckverbindersystem nach Anspruch 7, **dadurch gekennzeichnet, dass** das Betätigungselement (32.1) bezogen auf eine Steckerachse axial verschiebbar ist.

9. Steckverbindersystem nach Anspruch 8, **dadurch gekennzeichnet, dass** das Betätigungselement (32.1) in einer Öffnung (33.1) versenkt angeordnet ist und dass das zweite Element (41) einen Gegenvorsprung (41.1) aufweist, der im eingesteckten Zustand des Steckverbinders in die Öffnung (33.1) hineinragt.

10. Steckverbindersystem nach einem der Ansprüche 7 bis 9, **dadurch gekennzeichnet, dass** der Schalter (32) ein Mikroschalter mit einem Mikroschalter-Gehäuse und einem elektrischen Ausgang ist.

11. Steckverbindersystem nach Anspruch 6, **dadurch gekennzeichnet, dass** die Schaltereinrichtung ein Hall-Element, eine Radiofrequenz-Identifikationseinrichtung oder eine optische oder mechanische Anwesenheitserkennungseinrichtung aufweist.

12. Steckverbindersystem nach einem der Ansprüche 6 bis 11, **dadurch gekennzeichnet, dass** die Schaltereinrichtung auf Transistor-Transistor-Logik beruht und dass ein Ausgang eines Schalters (32) der Schaltereinrichtung mittels elektrischen Leitern (34.1, 34.2) mit einer Strahlungsquelle oder einer Steuerung einer Strahlungsquelle verbindbar ist.

13. Steckverbindersystem nach einem der Ansprüche 6 bis 12, **dadurch gekennzeichnet, dass** das erste Element zweiteilig ist, wobei ein erstes Teil (31.1) des ersten Elements am Buchsengehäuse oder einem Paneel befestigbar ist und ein zweites Teil (31.2) des ersten Elements vorzugweise die Schaltereinrichtung aufweist, an einem elektrischen Signalkabel (34) befestigt ist und am ersten Teil befestigbar ist.

## Claims

1. A protection device which can be mounted to a standardised optical plug connector system, wherein the plug connector system comprises a socket part, an adapter part, or a coupling part (1) with a socket housing (11), as well as a plug part (2), wherein an inside of the socket housing defines an inner space (1.1), into which a plug portion (2.1) of the plug part may be introduced, by which means a releasable plug connection may be created between the socket part, adapter part or coupling part (1), and the plug part (2), and wherein the protection device comprises a switch device, by way of which a radiation power fed to the plug part and/or the socket part, adapter part or coupling part, may be reduced or switched off when the plug connection is released, wherein the switch device comprises a first element, which may be fastened to an outer side of the socket housing (11), and a second element, which may be fastened to a portion of the plug part different to the plug portion thereof, and the switch device may be actuated through in that the first and the second element co-operate when the plug part (2) is plugged into the socket part, adapter part, or coupling part (1).

2. A protection device according to claim 1, **characterised in that** in the assembled condition of the protection device, all elements of the switch device, at least in one switch condition of the switch device, preferably in each switch condition of the switch device, are located completely outside the inner space of the socket housing.

3. A protection device according to claim 1 or 2, **characterised in that** the second element is an element for the actuation of the switch device, which can be attached to a standardised plug part, for example capable of being retrofitted and clipped on, wherein the second element is purely passive and free of components requiring an energy supply.

4. A protection device according to claim 3, **characterised in that** the second element comprises a counter-projection for actuating a non-locking mechanical switch of the switch device.

5. A protection device according to one of the claims 1 to 4, **characterised in that** it is dimensioned such that it may be mounted on plug connector types of the standard LSH.

6. An optical plug connector system comprising a socket part, adapter part or coupling part (1), with a socket housing (11), as well as a plug part (2), wherein an inside of the socket housing defines an inner space (1.1), into which a plug portion (2.1) of the plug part may be introduced, by which means a releasable plug connection may be created between the socket part, adapter part or coupling part (1), and the plug part (2) **characterised by** a protection device attached to the outside of the socket housing and on the plug part according to one of the preceding claims

7. A plug connector system according to claim 6, **characterised in that** the first element of the switch device comprises a non-locking, mechanically actuatable switch (32) with an actuation element (32.1), which for the actuation is to be displaced against a spring force by the second element (41).

8. A plug connector system according to claim 7, **characterised in that** the actuation element (32.1) is axially displaceable with respect to the plug axis.

9. A plug connector system according to claim 8, **characterised in that** the actuation element (32.1) is arranged countersunk in an opening (33.1), and that the second element (41) comprises a counter-projection (41.1), which projects into the opening (33.1) when the plug connector is plugged in.

10. A plug connector system according to one of the claims 7 to 9, **characterised in that** the switch (32) is a microswitch with a microswitch housing and an electrical output.

11. A plug connector system according to claim 6, **characterised in that** the switch device comprises a Hall element, a radio frequency identification device or an optical or mechanical presence recognition device.

12. A plug connector system according to one of the claims 6 to 11, **characterised in that** the switch device is based on transistor-transistor logic, and that an output of a switch (32) of the switch device may be connected to a radiation source or a controlling mechanism of a radiation source by way of electrical conductors (34.1, 34.2).

13. A plug connector system according to one of the claims 6 to 12, **characterised in that** the first element is of two parts, wherein a first part (31.1) of the first element may be fastened to the socket housing or a panel, and a second part (31.2) of the first element preferably comprises the switch device, is fastened to an electrical signal cable (34) and may be fastened to the first part.

## Revendications

1. Dispositif de protection apte à être monté ou monté sur un système optique normalisé dé connecteur enfichable, le système de connecteur enfichable présentant une pièce de douille, d'adaptateur ou d'accouplement (1) dotée d'un boîtier de douille (11) ainsi que d'une pièce enfichable (2),
l'intérieur du boîtier de douille définissant un espace intérieur (1.1) dans lequel une partie enfichable (2.1) de la pièce enfichable peut être inséré,
une liaison enfichable libérable pouvant être établie entre la pièce de douille, d'adaptateur ou d'accouplement (1) et la pièce enfichable (2),
le dispositif de protection présentant un dispositif de commutation par lequel la puissance d'un rayonnement apporté à la pièce enfichable et/ou à la pièce de douille, d'adaptateur ou d'accouplement peut être réduite ou débranchée lorsque la connexion enfichable est libérée,
le dispositif de commutation présentant un premier élément apte à être fixé sur le côté extérieur du boîtier de douille (11) et un deuxième élément (41) apte à être fixé sur une partie de la pièce enfichable différente de la partie enfichable et pouvant être actionnée par le fait que le premier et le deuxième élément coopèrent lorsque la pièce enfichable (2) est enfichée dans la pièce de douille, d'adaptateur ou d'accouplement (1).

2. Dispositif de protection selon la revendication 1, **caractérisé en ce qu'**au moins dans un état de commutation du dispositif de commutation et de préférence dans chaque état de commutation du dispositif de commutation, tous les éléments du dispositif de commutation sont situés entièrement à l'extérieur de l'espace intérieur du boîtier de douille lorsque le dispositif de protection est monté.

3. Dispositif de protection selon les revendications 1 ou 2, **caractérisé en ce que** le deuxième élément est par exemple un élément clipsable ajouté ultérieurement, placé sur la pièce enfichable normalisée et actionnant le dispositif de commutation et **en ce que** le premier élément est purement passif et ne présente pas de composant nécessitant une alimentation en énergie.

4. Dispositif de protection selon la revendication 3, **caractérisé en ce que** le deuxième élément, présente une saillie complémentaire qui actionne un commutateur mécanique non encliquetable du dispositif de commutation.

5. Système de connecteur enfichable selon l'une des revendications 1 à 4, **caractérisé en ce qu'**il est dimensionné de manière à pouvoir être monté sur des types de connecteur enfichable selon la norme LSH.

6. Système de connecteur optique enfichable qui présente une pièce de douille, d'adaptation ou d'accouplement (1) dotée d'un boîtier de douille (11) ainsi que d'une pièce enfichable (2),
l'intérieur du boîtier de douille définissant un espace intérieur (1.1) dans lequel une partie enfichable (2.1) de la pièce enfichable peut être insérée, ce qui permet d'établir une liaison enfichable libérable entre la pièce de douille, d'adaptateur ou d'accouplement (1) et la pièce enfichable (2),
**caractérisé par**
un dispositif de commutation selon l'une des revendications précédentes installé par l'extérieur sur le boîtier de douille et sur la pièce enfichable.

7. Système de connecteur enfichable selon la revendication 6, **caractérisé en ce que** le premier élément du dispositif de commutation présente un commutateur (32) non encliquetable, actionné mécaniquement et doté d'un élément d'actionnement (32.1) qui doit être déplacé en opposition à une force élastique pour être actionné par le deuxième élément (41).

8. Système de connecteur enfichable selon la revendication 7, **caractérisé en ce que** l'élément d'actionnement (32.1) peut coulisser axialement suivant un axe d'enfichage.

9. Système de connecteur enfichable selon la revendication 8, **caractérisé en ce que** l'élément d'actionnement (32.1) est enfoncé dans une ouverture (33.1) et **en ce que** le deuxième élément (41) présente une saillie complémentaire (41.1) qui pénètre dans l'ouverture (33.1) lorsque le connecteur enfichable est enfiché.

10. Système de connecteur enfichable selon l'une des revendications 7 à 9, **caractérisé en ce que** le commutateur (32) est un microcommutateur doté d'un boîtier de microcommutateur et d'une sortie électrique.

11. Système de connecteur enfichable selon la revendication 6, **caractérisé en ce que** le dispositif de commutation présente un élément Hall, un dispositif d'identification à radiofréquence ou un dispositif optique ou mécanique de détection de présence.

12. Système de connecteur enfichable selon l'une des revendications 6 à 11, **caractérisé en ce que** le dispositif de commutation repose sur une logique transistor-transistor et **en ce qu'**une sortie d'un commutateur (32) du dispositif de commutation peut être reliée au moyen de conducteurs électriques (34.1, 34.2) à une source de rayonnement ou à une commande d'une source de rayonnement.

13. Système de connecteur enfichable selon l'une des revendications 6 à 12, **caractérisé en ce que** le premier élément est en deux pièces, une première pièce (31.1) du premier élément pouvant être fixée sur le boîtier de douille ou sur un panneau et **en ce qu'**une deuxième pièce (31.2) du premier élément, qui présente de préférence le dispositif de commutation, est fixée à un câble électrique de signalisation (34) et peut être fixée sur la première pièce.
